# EUROPEAN PATENT SPECIFICATION

(11) **EP 4 124 001 B1**
(45) Date of publication and mention of the grant of the patent: **25.02.2026**
(21) Application number: 21771442.7
(22) Date of filing: 02.03.2021
(51) Int. Cl.: H04M 1/02, H04N 23/53, H04N 23/57, H04N 23/66, G06F 1/16

(54) **ELECTRONIC DEVICE**
ELEKTRONISCHE VORRICHTUNG
DISPOSITIF ÉLECTRONIQUE

(30) Priority: 19.03.2020 CN 202010199521
(43) Date of publication of application: 25.01.2023
(73) Proprietor: Vivo Mobile Communication Co., Ltd., Dongguan, Guangdong 523863 (CN)
(72) Inventor: YANG, Xuerong, Dongguan, Guangdong 523863 (CN)
(74) Representative: Murgitroyd & Company
(86) International application number: PCT/CN2021/078608
(87) International publication number: WO 2021/185069

(56) References cited:
- CN-A- 106 254 744
- CN-A- 109 803 070
- CN-A- 111 405 093
- CN-U- 206 042 147
- CN-U- 209 299 304
- US-A1- 2009 002 487
- US-A1- 2016 080 614
- US-A1- 2017 048 380
- US-A1- 2018 157 151
- US-B1- 7 957 765

## Description

### TECHNICAL FIELD

Embodiments of the present application relate to the field of photographing technologies, and in particular, to an electronic device.

### BACKGROUND

With the advancement of technologies and the development of electronic devices, electronic devices such as smartphones and tablet computers have become indispensable products in people's lives. An electronic device usually has a photographing function to meet usage requirements of users, and the photographing function can be performed by a camera module.

To improve the photographing effect of the camera module, a solution of separating the camera module from the electronic device can be adopted. In a case that the camera module and the electronic device are separated, the camera module can work independently, so that a distance between the camera module and the electronic device can be adjusted flexibly to improve the photographing effect.

However, in a case that the camera module is separated from the electronic device, the camera module is far away from a user. As a result, the camera module can be easily damaged by other people or animals, thereby reducing the reliability of the camera.

Document US 2017/048380 A1 discloses an image system including a control unit that performs, for an imaging device or an information processing device in the image system, different state controls according to fixation/separation information indicating a fixed state or a separated state of the imaging device and the information processing device to improve user-friendliness of both a cellular phone function of the information processing device and an imaging function of the imaging device.

Document US 2016/080614 A1 discloses a ball having a resilient housing 211, in which a camera 212 and a microelectronic package 213 including an orientation detector, a GPS sensor, an image storage memory, a transmitter and a processing unit are contained.

Document US 2018/157151 A1 discloses an around-view camera device including a camera body, two around-view lenses, and a counterweight piece. The counterweight piece is mounted on a side of the housing or circuit board that is away from the center of gravity of the camera body, which can shift the center of gravity of the camera body to a side away from the around-view lenses.

Document CN 209299304 U discloses an image capturing device applied to a terminal device, which can be used as a front camera or a rear camera of the terminal device when connected to the terminal device or as an independent camera when detached from the terminal device.

Document US 7957765 B1 discloses a mobile phone including a body and a detachable camera that a user can remove or separate from the body.

### SUMMARY

The embodiments of the present application disclose an electronic device to solve the problem of poor reliability of a camera module.

To resolve the foregoing technical problem, the present application is implemented as follows: the embodiments of the present application provide an electronic device, which is defined in claim 1.

Advantageous optional features are defined in the dependent claims.

### BRIEF DESCRIPTION OF DRAWINGS

To more clearly illustrate the technical solutions in the embodiments of the present application or the background, the accompanying drawings required for the description of the embodiments or the background will be briefly introduced below. Obviously, those of ordinary skill in the art can derive other accompanying drawings from these accompanying drawings without creative work.
FIG. 1 is a schematic structural diagram of an electronic device in a second state according to an embodiment of the present application;
FIG. 2 is a schematic structure diagram of a part of an electronic device in a first state according to an embodiment of the present application;
FIG. 3 is an exploded view of a part of a structure of an electronic device according to an embodiment of the present application;
FIG. 4 is an exploded view of a part of a structure of an electronic device according to another embodiment of the present application;
FIG. 5 and FIG. 6 are schematic diagrams of a part of a structure of an electronic device from different viewing angles according to still another embodiment of the present application;
FIG. 7 is a schematic structural diagram of an electronic device in a second state according to another embodiment of the present application; and

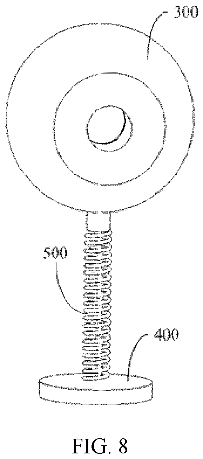

FIG. 8 is a schematic diagram of a part of a structure of the electronic device shown in FIG. 7.

Reference numerals in the accompanying drawings are as follows:
100-camera module, 110-camera bracket, 120-camera, 200-device body, 210-accommodating slot, 300-elastic protection component, 310-first protection body, 311-first connecting component, 312-first surface, 320-second protection body, 321-second connecting component, 330-hollow part, 340-counterweight part, 350-avoidance hole, 400-base, and 500-elastic component.

### DETAILED DESCRIPTION OF EMBODIMENTS

The following clearly and completely describes the technical solutions in the embodiments of the present application with reference to the accompanying drawings in the embodiments of the present application.

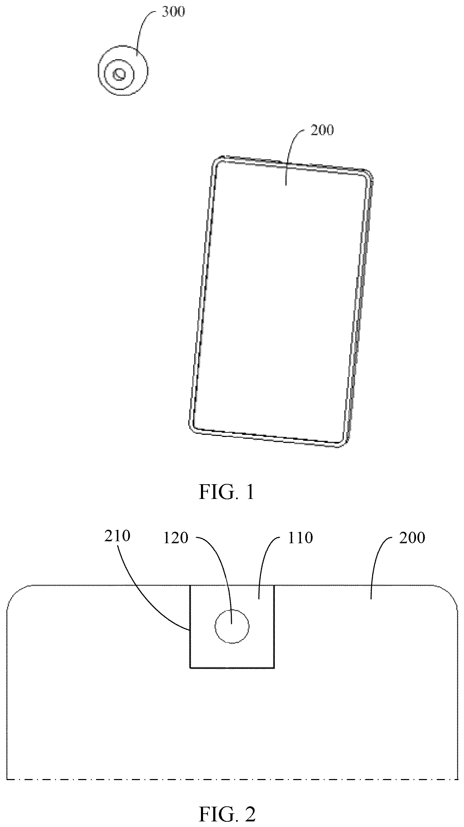

As shown in FIG. 1 to FIG. 3, an embodiment of the present application discloses an electronic device, including a device body 200, a camera module 100, and an elastic protection component 300.

The device body 200 can be used as the body of the electronic device. The device body 200 can specifically include components such as a casing, a main board, a battery, and a display screen. The embodiments of the present application do not limit the specific structure of the device body 200.

The camera module 100 is detachably connected to the device body 200. Therefore, the camera module 100 can be connected to the device body 200 or detached from the device body 200. In a case that the electronic device is in a first state, the camera module 100 is installed on the device body 200. In this case, the device body 200 can control the camera module 100 to work, and the camera module 100 can perform data transmission with the device body 200, so that an image captured by the camera module 100 is transmitted to the device body 200. In a case that the electronic device is in a second state, the camera module 100 is separated from the device body 200. In this case, the camera module 100 works independently of the device body 200, and a user can directly control the camera module 100 to perform photographing operations; or the device body 200 can control the camera module 100 to work. In this state, the camera module 100 can also perform data transmission with the device body 200, to transmit an image captured by the camera module 100 to the device body 200.

The elastic protection component 300 has elasticity. Optionally, the elastic protection component 300 may be made of an elastic material (for example, silica gel), and the elastic protection component 300 can be deformed after being subject to a force, to play a buffering role. The elastic protection component 300 is detachably connected to the camera module 100, so that the elastic protection component 300 can be connected to the camera module 100 or separated from the camera module 100. In a case that the elastic protection component 300 is connected to the camera module 100, the elastic protection component 300 can cover at least a part of the camera module 100; in a case that the elastic protection component 300 is separated from the camera module 100, the camera module 100 can be freely installed on other components (for example, the device body 200).

In the electronic device, the camera module 100 can be connected to the device body 200 and the device body 200 can control the camera module 100 to work, or the camera module 100 can be separated from the device body 200 to work independent of the device body 200 or the device body 200 controls the camera module 100 to work. Therefore, the user can flexibly adjust the placement position of the camera module 100 to perform long-distance photographing, so that the photographing effect of the camera module 100 is better. At the same time, in a case that the camera module 100 is separated from the device body 200, the elastic protection component 300 can be connected to the camera module 100, so that the elastic protection component 300 can protect the camera module 100 and prevent the camera module 100 from being damaged by external force. Therefore, the reliability of the camera module 100 is higher.

In an optional embodiment, the camera module 100 may include a camera bracket 110, a camera 120, a battery, and a first data transmission module. The camera 120, the battery, and the first data transmission module are all disposed on the camera bracket 110. Specifically, the battery and the first data transmission module can be disposed on the surface of the camera bracket 110 or inside the camera bracket 110. To better protect the battery and the first data transmission module, the battery and the first data transmission module can be disposed inside the camera bracket 110. The battery can be electrically connected to the camera 120. Therefore, the battery can supply power to the camera 120, so that the camera 120 can work independently. The first data transmission module is electrically connected to the camera 120, so that data transmission can be performed between the camera 120 and the first data transmission module. In a case that the camera module 100 is separated from the device body 200, the camera 120 performs data transmission with the device body 200 through the first data transmission module. Specifically, the device body 200 may be correspondingly provided with a second data transmission module. In a case that the electronic device is in the second state, the first data transmission module and the second data transmission module perform data transmission, and the camera 120 performs data communication with the device body 200 through the first data transmission module, so as to perform data transmission between the camera module 100 and the device body 200. In an optional embodiment, both the first data transmission module and the second data transmission module herein can be wireless transmission modules, such as radio frequency modules, and this structure does not limit relative positions of the camera module 100 and the device body 200. Therefore, it is more convenient for users to use the electronic device.

In a case that the camera module 100 adopts the above structure, the elastic protection component 300 can be detachably connected to the camera bracket 110. In a case that the electronic device is in the second state, the elastic protection component 300 is connected to the camera bracket 110. Specifically, the elastic protection component 300 may be connected to the outer surface of the camera bracket 110. Since the camera bracket 110 is the main structure of the camera module 100, in a case that the elastic protection component 300 is connected to the outer surface of the camera bracket 110, the elastic protection component 300 covers the camera module 100 to a greater extent, thereby achieving a better protection effect.

Optionally, the elastic protection component 300 is provided with an accommodating cavity and an avoidance hole 350, and the accommodating cavity and the avoidance hole 350 are in communication with each other. In a case that the electronic device is in the second state, at least a part of the camera bracket 110 and at least a part of the camera 120 are located in the accommodating cavity, and the camera 120 faces the avoidance hole 350, so that light in the external environment can enter the camera 120 through the avoidance hole 350, thereby helping the camera 120 to perform a photographing operation. In this case, the size of the elastic protection component 300 is larger, and the elastic protection component 300 can cover most of the outer surface of the camera bracket 110, so that the camera module 100 is less likely to come into contact with other objects, and the elastic protection component 300 can better withstand external forces. Therefore, the protection effect of the elastic protection component 300 is better.

Optionally, the shape and size of the accommodating cavity can be matched with the shape and size of the camera module 100, so that the elastic protection component 300 can better cover the camera module 100, so as to better protect the camera module 100.

In order to facilitate the connection and disconnection of the elastic protection component 300 and the camera module 100, the elastic protection component 300 includes a first protection body 310 and a second protection body 320. In a case that the electronic device is in the second state, the first protection body 310 and the second protection body 320 are connected to form the accommodating cavity. Specifically, both the first protection body 310 and the second protection body 320 are provided with grooves, the camera module 100 is placed in the groove of the first protection body 310 or the second protection body 320, and then the first protection body 310 is connected to the second protection body 320 to protect the camera module 100. Otherwise, in a case that the elastic protection component 300 and the camera module 100 need to be separated, the camera module 100 can be taken out after the first protection body 310 and the second protection body 320 are disconnected.

A method for connecting the first protection body 310 to the second protection body 320 can be selected flexibly, for example, the first protection body 310 and the second protection body 320 can be bound by a connecting rope. However, in this method, the connecting rope can be easily disconnected from the first protection body 310 and the second protection body 320, resulting in poor reliability of connection between the first protection body 310 and the second protection body 320. Therefore, in other embodiments, the first protection body 310 is provided with a first connecting component 311, and the second protection body 320 is provided with a second connecting component 321. In a case that the electronic device is in the second state, the first connecting component 311 is connected to the second connecting component 321. This connection method is more reliable, so that the first protection body 310 and the second protection body 320 are not easily separated unexpectedly.

There may be one first connecting component 311 and one second connecting component 321. However, to further improve the reliability of the connection between the first protection body 310 and the second protection body 320, multiple first connecting component 311 and multiple second connecting component 321 can be disposed, and each of the first connecting components 311 cooperates with each of the second connecting components 321 in a one-to-one correspondence.

Optionally, the first protection body 310 has a first surface 312, the first connecting component 311 is disposed on the first surface 312, the second protection body 320 has a second surface, and the second connecting component 321 is disposed on the second surface. In a case that the electronic device is in the second state, the first face 312 faces the second face. In a case that the first protection body 310 and the second protection body 320 are connected, the first connecting component 311 and the second connecting component 321 are both in a hidden state, and are not easily separated by interference from other objects in the external environment. Therefore, this structure can further improve the reliability after the first protection body 310 and the second protection body 320 are connected. At the same time, this solution can also optimize the appearance and texture of the camera module 100 in a case that the camera module 100 works independently, thereby improving user experience.

In an embodiment, both the first surface 312 and the second surface can be disposed as flat surfaces, so as to simplify the structure of the elastic protection component 300.

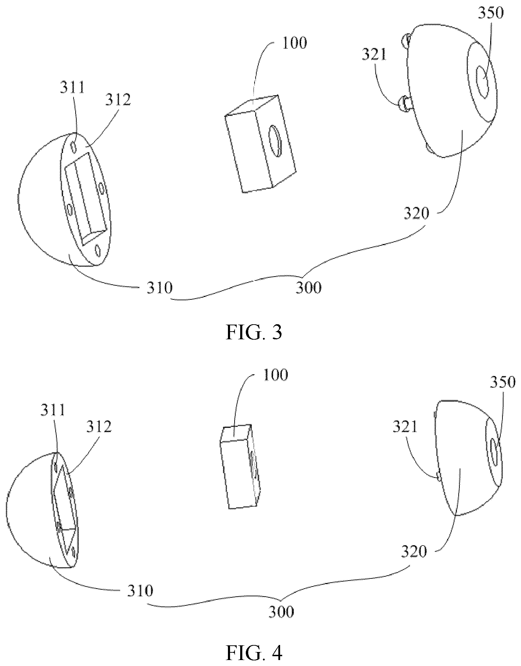

In an optional embodiment, as shown in FIG. 3, one of the first connecting component 311 and the second connecting component 321 is a clamping hole, the other is a clamping convex component, and the clamping hole and the clamping convex component can be snap-fitted, so that the first protection body 310 and the second protection body 320 can be snap-fitted through the clamping hole and the clamping convex component. This connection method has advantages of higher connection strength and simpler operation. Further, the material of the clamping convex component herein may be different from the material of another part of the first protection body 310 or the second protection body 320. Specifically, for example, the first protection body 310 is provided with a clamping convex component. The first protection body 310 may include a body and a clamping convex component as described herein. The clamping convex component is provided on the body, and has hardness that may be greater than that of the body, so that the clamping convex component is less likely to greatly deform while satisfying snap-fitting. Therefore, the connection strength of the first protection body 310 and the second protection body 320 is higher, and at the same time, it is more conducive to faster clamping of the clamping hole and the clamping convex component.

Of course, in other embodiments, as shown in FIG. 4, the first connecting component 311 and the second connecting component 321 may be suitable magnetic connecting components, and optionally, the magnetic connecting components here may be permanent magnets. This structure enables the first connecting component 311 and the second connecting component 321 to be magnetically connected, so as to achieve the purpose of magnetically connecting the first protection body 310 and the second protection body 320. In this connection method, it is more convenient to arrange the structures of the first connecting component 311 and the second connecting component 321, so that the structure of the electronic device is simpler, and the connection of the first protection body 310 and the second protection body 320 is facilitated.

The shape of the first protection body 310 and the second protection body 320 can be selected flexibly. Optionally, the first protection body 310 and the second protection body 320 are both spheres. Specifically, the first protection body 310 and the second protection body 320 are both hemispheres, and after the first protection body 310 and the second protection body 320 are connected, the outer surface of the entire elastic protection component 300 is a spherical surface. In a case that the first protection body 310 and the second protection body 320 are connected, the placement position of the entire elastic protection component 300 is more flexible, so that the orientation of the camera module 100 connected to the elastic protection component 300 can be flexibly changed, to better meet the photographing requirements of users in different states. At the same time, the structure allows the user to hold the elastic protection component 300 more comfortably.

According to the claimed invention, in a case that the electronic device is in the second state, the center of gravity of the elastic protection component 300 is located outside the optical axis of the camera 120, that is, the elastic protection component 300 may be eccentrically disposed relative to the camera module 100, and under the action of gravity, the camera module 100 can be kept at a predetermined position, so that obtained images are more convenient for users to view and use. After this arrangement, the user does not need to spend too much time to place the camera module 100 and the elastic protection component 300, and the user is even allowed to throw the elastic protection component 300 and the camera module 100 to a designated position. Therefore, the structure is more convenient for the user to perform a photographing operation in the second state.

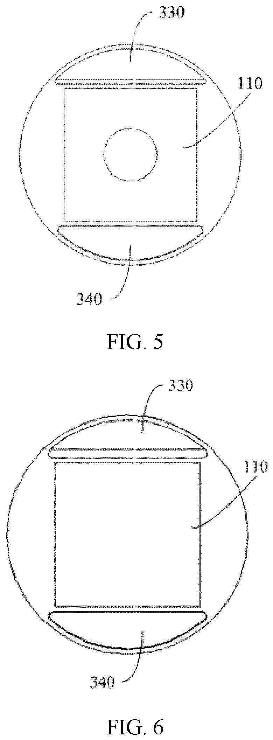

To make the center of gravity of the elastic protection component 300 located outside the optical axis of the camera 120, as shown in FIG. 5 and FIG. 6, the elastic protection component 300 is provided with a hollow part 330. In a case that the electronic device is in the second state, the hollow part 330 is located above the optical axis of the camera 120. In this structure, the density of a part of the elastic protection component 300 where the hollow portion 330 is disposed is different from the density of another part of the elastic protection component 300, so that the weight of the part of the elastic protection component 300 where the hollow portion 330 is disposed is smaller than that of the another part of the elastic protection component 300. Therefore, the center of gravity of the elastic protection component 300 is moved downward relative to the geometric center of the elastic protection component 300, so as to avoid the optical axis of the camera 120 as much as possible. At the same time, this embodiment can also appropriately reduce the weight of the elastic protection component 300, so as to be more convenient for the user to operate.

Still referring to FIG. 5 and FIG. 6, in other embodiments, to make the center of gravity of the elastic protection component 300 be located outside the optical axis of the camera 120, the elastic protection component 300 may be provided with a counterweight part 340. Optionally, the density of the counterweight part 340 may be greater than the density of the rest of the elastic protector 300, for example, the weight portion 340 may be a metal component. In a case that the electronic device is in the second state, the weight portion 340 is located under the optical axis. In this structure, the weight of the part of the elastic protection component 300 where the counterweight part 340 is disposed is greater than that of another part of the elastic protection component 300. Therefore, the center of gravity of the elastic protection component 300 is moved downward relative to the geometric center of the elastic protection component 300, so as to avoid the optical axis of the camera 120 as much as possible. At the same time, in this embodiment, the elastic protection component 300 is a solid structure, which has a higher structural strength and is not easily deformed. Therefore, the protection effect is better.

Of course, both the hollow part 330 and the counterweight part 340 can also be provided in the elastic protection component 300, so that the center of gravity of the elastic protection component 300 deviates from the geometric center of the elastic protection component 300 to a greater extent. Therefore, the camera module 100 can be better kept in a predetermined position more stably.

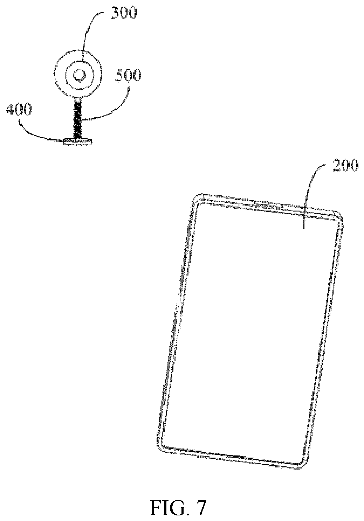

As shown in FIG. 7, the camera module 100 further includes a base 400 having a support surface. In a case that the electronic device is in the second state, the elastic protection component 300 is connected to a side of the base 400 away from the support surface. In a case that the electronic device is in the second state, the elastic protection component 300 can be placed on a placing base such as a ground surface or a table surface, and the support surface herein can be in contact with the placing base, so that the elastic protection component 300 can be stably placed on the placing base through the base 400, so that the camera module 100 can be kept at a predetermined position.

Further, the support surface can be disposed as a flat surface, so as to achieve a better supporting effect.

The base 400 can be directly connected to the elastic protection component 300. In other embodiments, the camera module 100 further includes an elastic component 500, and the elastic component 500 is connected to the base 400. Optionally, the elastic component 500 herein can be a spring. In a case that the electronic device is in the second state, the base 400 is connected to the elastic protection component 300 through the elastic component 500. The elastic component 500 can be elastically deformed. In a case that the elastic protection component 300 collides with other objects, although the elastic protection component 300 shakes, a part of the elastic component 500 connected to the elastic protection component 300 can move synchronously in a case that the elastic protection component 300 shakes, and an end of the elastic protection component 300 connected to the base 400 can remain stationary or only shake slightly. Therefore, this structure makes the base 400 not easy to move, so that the camera module 100 and the elastic protection component 300 are not easily toppled. Thus, the stability of the camera module 100 in the second state is improved. Therefore, in a case that the elastic component 500 is provided, the camera module 100 can be placed at a position far away from the user for photographing, so as to further optimize usage experience of the user.

Optionally, the camera module 100 further includes a magnetic component connected to the elastic protection part 300, and in a case that the electronic device is in the second state, the elastic protection part 300 can be magnetically connected to an external component through the magnetic component. Optionally, the magnetic component may be disposed on the surface of the elastic protection component 300 or inside the elastic protection component 300; and the magnetic component may be a permanent magnet, which may adopt a sheet-like structure to improve the magnetic attraction effect. In a case that the electronic device is in the second state, the user can fasten the entire elastic protection component 300 and camera module 100 on any magnetically conductive external component (such as an iron plate) through the magnetic component, so as to better maintain the position of the camera 120 relative to the user. This magnetic method enables the user to fasten the camera module 100 more quickly, and at the same time, the connection method has less structural restrictions on external components, so that the fastening position of the camera module 100 has more options.

In an optional embodiment, the device body 200 is provided with an accommodating slot 210, and the camera module 100 is provided with a second data transmission module. In a case that the electronic device is in the first state, at least a part of the camera module 100 is located in the accommodating slot 210, and the camera 120 performs data communication with the device body 200 through the second data transmission module. In this embodiment, in a case that the camera module 100 is connected to the device body 200, the camera module 100 can be disposed by using the space occupied by the device body 200, so that a protruding degree of the camera module 100 relative to the device body 200 is smaller, and even does not protrude. This arrangement can not only improve the appearance and texture of the electronic device, but also prevent the camera module 100 from easily colliding with other objects due to protruding relative to the device body 200, thereby protecting the camera module 100.

Optionally, the device body 200 is provided with a first interface, the first interface may be specifically disposed in the accommodating slot 210, and the second data transmission module includes an electrical connection end. In a case that the electronic device is in the first state, the electrical connection end is plugged into the first interface, thereby realizing data transmission between the electrical connection end and the first interface. In this plug manner, the electrical connection end and the first interface are not easily detached, thereby improving the reliability of the connection between the electrical connection end and the first interface.

In another embodiment, the electrical connection end and the first interface are both magnetic contacts, and in a case that the electronic device is in the first state, the electrical connection end is magnetically connected to the first interface. This connection method can simplify the connection between the electrical connection end and the first interface, thereby realizing the quick connection between the camera module 100 and the device body 200. Optionally, to further enhance the reliability of the connection between the electrical connection end and the first interface, both the electrical connection end and the first interface can be disposed as annular magnetic contacts to increase the connection area of the electrical connection end and the first interface, so as to achieve the above purpose.

Optionally, the first interface can be a charging interface. In a case that the camera module 100 is connected to the device body 200, the device body 200 can charge the camera module 100, thereby ensuring the battery life of the camera module 100, so as to facilitate subsequent usage of the camera module 100. Alternatively, the first interface is a data transmission interface, and the data transmission interface can realize data transmission. Of course, the first interface can also be used as a charging interface and a data transmission interface at the same time, thereby simplifying the structure of the electronic device. Optionally, the first interface here may be a USB interface, for example, may be specifically a Micro USB interface or the like.

The electronic device disclosed in this embodiment of the present application may be a smart phone, a tablet computer, an ebook reader, a wearable device (for example, a smart watch), a video game console, and the like. A specific type of the electronic device is not limited in this embodiment of the present application.

The embodiments of the present application focus on describing differences between the embodiments, and different optimization features of the embodiments may be combined to form better embodiments provided that they are not contradictory. Considering brevity, details are not described herein again.

## Claims

1. An electronic device comprising:
a device body (200);
a camera module (100), wherein the camera module (100) is detachably connected to the device body (200), in a case that the electronic device is in a first state, the camera module (100) is installed on the device body (200) and the device body (200) controls the camera module (100) to work; and in a case that the electronic device is in a second state, the camera module (100) is separated from the device body (200), and the camera module (100) works independently of the device body (200) or the device body (200) controls the camera module (100) to work; and
**characterized by** further comprising:
an elastic protection component (300), wherein the elastic protection component (300) is detachably connected to the camera module (100); the elastic protection component (300) comprises a first protection body (310) and a second protection body (320), each of which is provided with a groove; the camera module (100) is placed in the groove of the first protection body (310) or the groove of the second protection body (320), and the first protection body (310) and the second protection body (320) are connected to each other;
wherein the elastic protection component (300) is provided with a hollow part (330), and in a case that the electronic device is in the second state, the hollow part (330) is located above an optical axis of a camera (120), and a center of gravity of the elastic protection component (300) is located outside the optical axis of the camera (120).

2. The electronic device according to claim 1, wherein the camera module (100) comprises:
a camera bracket (110);
the camera (120), wherein the camera (120) is disposed on the camera bracket (110);
a battery, wherein the battery is disposed on the camera bracket (110), and the battery is electrically connected to the camera (120); and
a first data transmission module, wherein the first data transmission module is disposed on the camera bracket (110), and the first data transmission module is electrically connected to the camera (120);
wherein the elastic protection component (300) is detachably connected to the camera bracket (110), and in a case that the electronic device is in the second state, the camera (120) performs data communication with the device body (200) through the first data transmission module, and the elastic protection component (300) is connected to the camera bracket (110).

3. The electronic device according to claim 2, wherein the elastic protection component (300) is provided with an accommodating cavity and an avoidance hole (350), and in a case that the electronic device is in the second state, at least a part of the camera bracket (110) and at least a part of the camera (120) are located in the accommodating cavity, and the camera (120) faces the avoidance hole (350).

4. The electronic device according to claim 3, wherein in a case that the electronic device is in the second state, the first protection body (310) is connected to the second protection body (320) to form the accommodating cavity.

5. The electronic device according to claim 4, wherein the first protection body (310) is provided with a first connecting component (311), the second protection body (320) is provided with a second connecting component (321), and in a case that the electronic device is in the second state, the first connecting component (311) is connected to the second connecting component (321).

6. The electronic device according to claim 5, wherein the first protection body (310) has a first surface (312), the first connecting component (311) is disposed on the first surface (312), the second protection body (320) has a second surface, the second connecting component (321) is disposed on the second surface, and in a case that the electronic device is in the second state, the first surface (312) faces the second surface.

7. The electronic device according to claim 5, wherein one of the first connecting component (311) and the second connecting component (321) is a clamping hole, and another is a clamping convex component; or
the first connecting component (311) and the second connecting component (321) are matched magnetic connecting components.

8. The electronic device of claim 4, wherein the first protection body (310) and the second protection body (320) are both hemispheres.

9. The electronic device according to claim 1, wherein the elastic protection component (300) is provided with a counterweight part (340), and in a case that the electronic device is in the second state, the counterweight part (340) is located under the optical axis.

10. The electronic device according to claim 1, wherein the camera module (100) further comprises a base (400), the base (400) has a support surface, and in a case that the electronic device is in the second state, the elastic protection component (300) is connected to a side of the base (400) away from the support surface.

11. The electronic device according to claim 10, wherein the camera module (100) further comprises an elastic component (500), the elastic component (500) is connected to the base (400), and in a case that the electronic device is in the second state, the base (400) is connected to the elastic protection component (300) through the elastic component (500).

12. The electronic device according to claim 1, wherein the camera module (100) further comprises a magnetic component, the magnetic component is connected to the elastic protection component (300), and in a case that the electronic device is in the second state, the elastic protection component (300) is magnetically connected to an external component through the magnetic component.

13. The electronic device according to claim 1, wherein the device body (200) is provided with an accommodating slot (210), the camera module (100) is provided with a second data transmission module, and in a case that the electronic device is in the first state, at least a part of the camera module (100) is located in the accommodating slot (210), and the camera (120) performs data communication with the device body (200) through the second data transmission module;
the device body (200) is provided with a first interface, and the second data transmission module comprises an electrical connection end; and
in a case that the electronic device is in the first state, the electrical connection end is plugged into the first interface; or
both the electrical connection end and the first interface are magnetic contacts, and in a case that the electronic device is in the first state, the electrical connection end is magnetically connected to the first interface.

## Patentansprüche

1. Eine elektronische Vorrichtung, die Folgendes beinhaltet:
einen Vorrichtungskörper (200);
ein Kameramodul (100), wobei das Kameramodul (100) mit dem Vorrichtungskörper (200) lösbar verbunden ist, in einem Fall, in dem sich die elektronische Vorrichtung in einem ersten Zustand befindet, das Kameramodul (100) an dem Vorrichtungskörper (200) montiert ist und der Vorrichtungskörper (200) das Kameramodul (100) steuert, damit dieses arbeitet; und in einem Fall, in dem sich die elektronische Vorrichtung in einem zweiten Zustand befindet, das Kameramodul (100) von dem Vorrichtungskörper (200) getrennt ist und das Kameramodul (100) unabhängig von dem Vorrichtungskörper (200) arbeitet oder der Vorrichtungskörper (200) das Kameramodul (100) steuert, damit dieses arbeitet; und
**dadurch gekennzeichnet, dass** sie ferner Folgendes beinhaltet:
eine elastische Schutzkomponente (300), wobei die elastische Schutzkomponente (300) mit dem Kameramodul (100) lösbar verbunden ist; die elastische Schutzkomponente (300) einen ersten Schutzkörper (310) und einen zweiten Schutzkörper (320) beinhaltet, von denen jeder mit einer Aussparung versehen ist; das Kameramodul (100) in der Aussparung des ersten Schutzkörpers (310) oder der Aussparung des zweiten Schutzkörpers (320) platziert ist und der erste Schutzkörper (310) und der zweiten Schutzkörper (320) miteinander verbunden sind;
wobei die elastische Schutzkomponente (300) mit einem Hohlteil (330) versehen ist und in einem Fall, in dem sich die elektronische Vorrichtung in dem zweiten Zustand befindet, sich der Hohlteil (330) oberhalb einer optischen Achse einer Kamera (120) befindet und sich ein Schwerpunkt der elastischen Schutzkomponente (300) außerhalb der optischen Achse der Kamera (120) befindet.

2. Elektronische Vorrichtung gemäß Anspruch 1, wobei das Kameramodul (100) Folgendes beinhaltet:
eine Kamerahalterung (110);
die Kamera (120), wobei die Kamera (120) an der Kamerahalterung (110) angeordnet ist;
eine Batterie, wobei die Batterie an der Kamerahalterung (110) angeordnet ist und die Batterie mit der Kamera (120) elektrisch verbunden ist; und
ein erstes Datenübertragungsmodul, wobei das erste Datenübertragungsmodul an der Kamerahalterung (110) angeordnet ist und das erste Datenübertragungsmodul mit der Kamera (120) elektrisch verbunden ist;
wobei die elastische Schutzkomponente (300) mit der Kamerahalterung (110) lösbar verbunden ist und in einem Fall, in dem sich die elektronische Vorrichtung in dem zweiten Zustand befindet, die Kamera (120) durch das erste Datenübertragungsmodul eine Datenkommunikation mit dem Vorrichtungskörper (200) durchführt und die elastische Schutzkomponente (300) mit der Kamerahalterung (110) verbunden ist.

3. Elektronische Vorrichtung gemäß Anspruch 2, wobei die elastische Schutzkomponente (300) mit einem Aufnahmehohlraum und einem Ausweichloch (350) versehen ist und in einem Fall, in dem sich die elektronische Vorrichtung in dem zweiten Zustand befindet, sich mindestens ein Teil der Kamerahalterung (110) und mindestens ein Teil der Kamera (120) in dem Aufnahmehohlraum befinden und die Kamera (120) dem Ausweichloch (350) gegenüberliegt.

4. Elektronische Vorrichtung gemäß Anspruch 3, wobei in einem Fall, in dem sich die elektronische Vorrichtung in dem zweiten Zustand befindet, der erste Schutzkörper (310) mit dem zweiten Schutzkörper (320) verbunden ist, um den Aufnahmehohlraum zu bilden.

5. Elektronische Vorrichtung gemäß Anspruch 4, wobei der erste Schutzkörper (310) mit einer ersten Verbindungskomponente (311) versehen ist, der zweite Schutzkörper (320) mit einer zweiten Verbindungskomponente (321) versehen ist und in einem Fall, in dem sich die elektronische Vorrichtung in dem zweiten Zustand befindet, die erste Verbindungskomponente (311) mit der zweiten Verbindungskomponente (321) verbunden ist.

6. Elektronische Vorrichtung gemäß Anspruch 5, wobei der erste Schutzkörper (310) eine erste Oberfläche (312) aufweist, die erste Verbindungskomponente (311) an der ersten Oberfläche (312) angeordnet ist, der zweite Schutzkörper (320) eine zweite Oberfläche aufweist, die zweite Verbindungskomponente (321) an der zweiten Oberfläche angeordnet ist und in einem Fall, in dem sich die elektronische Vorrichtung in dem zweiten Zustand befindet, die erste Oberfläche (312) der zweiten Oberfläche gegenüberliegt.

7. Elektronische Vorrichtung gemäß Anspruch 5, wobei eine von der ersten Verbindungskomponente (311) und der zweiten Verbindungskomponente (321) ein Klemmloch ist und eine andere eine konvexe Klemmkomponente ist; oder
die erste Verbindungskomponente (311) und die zweite Verbindungskomponente (321) zueinander passende magnetische Verbindungskomponenten sind.

8. Elektronische Vorrichtung gemäß Anspruch 4, wobei der erste Schutzkörper (310) und der zweite Schutzkörper (320) beide Halbkugeln sind.

9. Elektronische Vorrichtung gemäß Anspruch 1, wobei die elastische Schutzkomponente (300) mit einem Gegengewichtsteil (340) versehen ist und in einem Fall, in dem sich die elektronische Vorrichtung in dem zweiten Zustand befindet, sich das Gegengewichtsteil (340) unterhalb der optischen Achse befindet.

10. Elektronische Vorrichtung gemäß Anspruch 1, wobei das Kameramodul (100) ferner eine Basis (400) beinhaltet, die Basis (400) eine Stützoberfläche aufweist und in einem Fall, in dem sich die elektronische Vorrichtung in dem zweiten Zustand befindet, die elastische Schutzkomponente (300) mit einer von der Stützoberfläche abgewandten Seite der Basis (400) verbunden ist.

11. Elektronische Vorrichtung gemäß Anspruch 10, wobei das Kameramodul (100) ferner eine elastische Komponente (500) beinhaltet, die elastische Komponente (500) mit der Basis (400) verbunden ist und in einem Fall, in dem sich die elektronische Vorrichtung in dem zweiten Zustand befindet, die Basis (400) durch die elastische Komponente (500) mit der elastischen Schutzkomponente (300) verbunden ist.

12. Elektronische Vorrichtung gemäß Anspruch 1, wobei das Kameramodul (100) ferner eine magnetische Komponente beinhaltet, die magnetische Komponente mit der elastischen Schutzkomponente (300) verbunden ist und in einem Fall, in dem sich die elektronische Vorrichtung in dem zweiten Zustand befindet, die elastische Schutzkomponente (300) durch die magnetische Komponente mit einer externen Komponente magnetisch verbunden ist.

13. Elektronische Vorrichtung gemäß Anspruch 1, wobei der Vorrichtungskörper (200) mit einer Aufnahmevertiefung (210) versehen ist, das Kameramodul (100) mit einem zweiten Datenübertragungsmodul versehen ist und in einem Fall, in dem sich die elektronische Vorrichtung in dem ersten Zustand befindet, sich mindestens ein Teil des Kameramoduls (100) in der Aufnahmevertiefung (210) befindet und die Kamera (120) durch das zweite Datenübertragungsmodul eine Datenkommunikation mit dem Vorrichtungskörper (200) durchführt;
der Vorrichtungskörper (200) mit einer ersten Schnittstelle versehen ist und das zweite Datenübertragungsmodul ein elektrisches Verbindungsende beinhaltet; und
in einem Fall, in dem sich die elektronische Vorrichtung in dem ersten Zustand befindet, das elektrische Verbindungsende in die erste Schnittstelle eingesteckt ist; oder
sowohl das elektrische Verbindungsende als auch die erste Schnittstelle magnetische Kontakte sind und in einem Fall, in dem sich die elektronische Vorrichtung in dem ersten Zustand befindet, das elektrische Verbindungsende mit der ersten Schnittstelle magnetisch verbunden ist.

## Revendications

1. Un dispositif électronique comprenant :
un corps de dispositif (200) ;
un module caméra (100), dans lequel le module caméra (100) est raccordé de manière détachable au corps de dispositif (200), dans un cas où le dispositif électronique est dans un premier état, le module caméra (100) est installé sur le corps de dispositif (200) et le corps de dispositif (200) commande le fonctionnement du module caméra (100) ; et dans un cas où le dispositif électronique est dans un deuxième état, le module caméra (100) est séparé du corps de dispositif (200), et le module caméra (100) fonctionne indépendamment du corps de dispositif (200) ou le corps de dispositif (200) commande le fonctionnement du module caméra (100) ; et
**caractérisé en ce qu'**il comprend en outre :
un élément de protection élastique (300), dans lequel l'élément de protection élastique (300) est raccordé de manière détachable au module caméra (100) ; l'élément de protection élastique (300) comprend un premier corps de protection (310) et un deuxième corps de protection (320), chacun étant pourvu d'une rainure ; le module caméra (100) est placé dans la rainure du premier corps de protection (310) ou la rainure du deuxième corps de protection (320), et le premier corps de protection (310) et le deuxième corps de protection (320) sont raccordés l'un à l'autre ;
dans lequel l'élément de protection élastique (300) est pourvu d'une partie creuse (330), et dans un cas où le dispositif électronique est dans le deuxième état, la partie creuse (330) est située au-dessus d'un axe optique d'une caméra (120), et un centre de gravité de l'élément de protection élastique (300) est situé en dehors de l'axe optique de la caméra (120).

2. Le dispositif électronique selon la revendication 1, dans lequel le module caméra (100) comprend :
une monture de caméra (110) ;
la caméra (120), la caméra (120) étant disposée sur la monture de caméra (110) ;
une batterie, la batterie étant disposée sur le support de caméra (110), et la batterie étant électriquement raccordée à la caméra (120) ; et
un premier module de transmission de données, le premier module de transmission de données étant disposé sur la monture de caméra (110), et le premier module de transmission de données étant électriquement raccordé à la caméra (120) ;
dans lequel l'élément de protection élastique (300) est raccordé de manière détachable à la monture de caméra (110), et dans un cas où le dispositif électronique est dans le deuxième état, la caméra (120) effectue la communication de données avec le corps de dispositif (200) par l'intermédiaire du premier module de transmission de données, et l'élément de protection élastique (300) est raccordé à la monture de caméra (110).

3. Le dispositif électronique selon la revendication 2, dans lequel l'élément de protection élastique (300) est pourvu d'une cavité d'hébergement et d'un trou d'évitement (350), et dans un cas où le dispositif électronique est dans le deuxième état, au moins une partie de la monture de caméra (110) et au moins une partie de la caméra (120) sont situées dans la cavité d'hébergement, et la caméra (120) fait face au trou d'évitement (350).

4. Le dispositif électronique selon la revendication 3, dans lequel dans un cas où le dispositif électronique est dans le deuxième état, le premier corps de protection (310) est raccordé au deuxième corps de protection (320) afin de former la cavité d'hébergement.

5. Le dispositif électronique selon la revendication 4, dans lequel le premier corps de protection (310) est pourvu d'un premier élément de raccordement (311), le deuxième corps de protection (320) est pourvu d'un deuxième élément de raccordement (321), et dans un cas où le dispositif électronique est dans le deuxième état, le premier élément de raccordement (311) est raccordé au deuxième élément de raccordement (321).

6. Le dispositif électronique selon la revendication 5, dans lequel le premier corps de protection (310) a une première surface (312), le premier élément de raccordement (311) est disposé sur la première surface (312), le deuxième corps de protection (320) a une deuxième surface, le deuxième élément de raccordement (321) est disposé sur la deuxième surface, et dans un cas où le dispositif électronique est dans le deuxième état, la première surface (312) fait face à la deuxième surface.

7. Le dispositif électronique selon la revendication 5, dans lequel l'un du premier élément de raccordement (311) et du deuxième élément de raccordement (321) est un trou de fixation, et un autre est un élément convexe de fixation ; ou
le premier élément de raccordement (311) et le deuxième élément de raccordement (321) sont des éléments de raccordement magnétiques appariés.

8. Le dispositif électronique de la revendication 4, dans lequel le premier corps de protection (310) et le deuxième corps de protection (320) sont tous deux des hémisphères.

9. Le dispositif électronique selon la revendication 1, dans lequel l'élément de protection élastique (300) est pourvu d'une partie de contrepoids (340), et dans un cas où le dispositif électronique est dans le deuxième état, la partie de contrepoids (340) est située sous l'axe optique.

10. Le dispositif électronique selon la revendication 1, dans lequel le module caméra (100) comprend en outre une base (400), la base (400) a une surface de support, et dans un cas où le dispositif électronique est dans le deuxième état, l'élément de protection élastique (300) est raccordé à un côté de la base (400) éloigné de la surface de support.

11. Le dispositif électronique selon la revendication 10, dans lequel le module caméra (100) comprend en outre un élément élastique (500), l'élément élastique (500) est raccordé à la base (400), et dans un cas où le dispositif électronique est dans le deuxième état, la base (400) est raccordée à l'élément de protection élastique (300) par l'intermédiaire de l'élément élastique (500).

12. Le dispositif électronique selon la revendication 1, dans lequel le module caméra (100) comprend en outre un élément magnétique, l'élément magnétique est raccordé à l'élément de protection élastique (300), et dans un cas où le dispositif électronique est dans le deuxième état, l'élément de protection élastique (300) est magnétiquement raccordé à un élément externe par l'intermédiaire de l'élément magnétique.

13. Le dispositif électronique selon la revendication 1, dans lequel le corps de dispositif (200) est pourvu d'une fente d'hébergement (210), le module caméra (100) est pourvu d'un deuxième module de transmission de données, et dans un cas où le dispositif électronique est dans le premier état, au moins une partie du module caméra (100) est située dans la fente d'hébergement (210), et la caméra (120) effectue la communication de données avec le corps de dispositif (200) par l'intermédiaire du deuxième module de transmission de données ;
le corps de dispositif (200) est pourvu d'une première interface, et le deuxième module de transmission de données comprend une extrémité de raccordement électrique ; et dans un cas où le dispositif électronique est dans le premier état, l'extrémité de raccordement électrique est enfichée dans la première interface ; ou
à la fois l'extrémité de raccordement électrique et la première interface sont des contacts magnétiques, et dans un cas où le dispositif électronique est dans le premier état, l'extrémité de raccordement électrique est magnétiquement raccordée à la première interface.
